# EUROPEAN PATENT APPLICATION

(11) **EP 3 734 809 A1**
(43) Date of publication of application: **04.11.2020**
(21) Application number: 18895075.2
(22) Date of filing: 20.11.2018
(51) Int. Cl.: H02K 7/18, H02K 5/04, H02K 7/116, H02K 1/27, H02K 7/108, H02J 7/14, H02J 7/00

(54) **PORTABLE SELF-POWERED GENERATOR AND MODULE COMPRISING SAME**

(30) Priority: 28.12.2017 KR 20170182114
(71) Applicant: Naschem Co., Ltd., Paju-si, Gyeonggi-do 10880 (KR)
(72) Inventor: SOHN, Dae Up, Paju-si Gyeonggi-do 10880 (KR)
(74) Representative: Gulde & Partner
(86) International application number: PCT/KR2018/014255
(87) International publication number: WO 2019/132254

(57) **Abstract**

Disclosed herein is a portable self-powered generation apparatus using one stator and one rotor, and a module equipped with the same, the apparatus including a rotor cover member that is rotatable, first and second rotating members that rotate the rotor cover member, first and second wires that each rotate the first and second rotating members by a pulling operation, first and second spring members that perform winding operations on the first and second wires, respectively, and a power generation member that generates power according to rotation of the rotor cover member, wherein the power generation member is embedded in the rotor cover member and includes a rotor that rotates according to rotation of the rotor cover member and a stator mounted in the rotor, thereby allowing a user to continuously generate power for a long time by repeatedly pulling the wires with one hand or two hands.

## Description

### [Technical Field]

The present invention relates to a portable self-powered generation apparatus using one stator and one rotor, and a module equipped with the same, and more particularly, to a portable self-powered generation apparatus capable of being manufactured in a small size, self-generating power at high efficiency to charge a battery, and being coupled to a variety of smart modules for use in military operations, refugee camps, disasters such as an earthquake or the like, emergency situations on ships, emergency in outdoor activities or the like, in which there is often no access to electricity, and a module equipped with the same.

### [Background Art]

Generally, electricity is used as a major energy source in industrial society, but due to depletion of fossil energy, investment and development for various alternative power generation facilities, such as solar power generation, wind power generation, tidal power generation, and the like, are rapidly progressing. Meanwhile, electricity generated from power generation facilities is supplied to household devices or products and industrial devices or products through power cables and is used as an energy source, but most products that require portability or activity, such as small home appliances and household items, are equipped with batteries, such as a primary battery or a secondary battery, that is used as power supplies.

In addition, as societies become more sophisticated, various electronic devices are being developed, and the number of people who use the electronic devices is increasing day by day. Recently, use of portable electronic devices, such as smart phones, has been increasing. Further, since, due to the development of outdoor leisure culture, such as fishing, mountain climbing, and the like, time spent outdoors is increasing, spare batteries are being used.

However, since batteries are limited in use time thereof, the batteries should be recharged when power is discharged, but there is a problem that the batteries cannot be charged while on the move or outdoors. In addition, there are problems that communications for rescue requests, electric devices for lighting, smartphones, tablet PCs, laptops, and the like are not operable in military operations, refugee camps, disasters such as an earthquake or the like, emergency situations on ships or the like, in which batteries run low and there is often no access to electricity.

Therefore, recently, portable self-powered generation apparatuses that secure electrical energy that is consumed in various electronic devices used for outdoor activities, such as military operations, fishing, mountain climbing, and the like, through self-powered generation and use required power during an emergency, are proposed and used. When it is attempted to generate electrical energy using the conventional portable self-powered generation apparatuses, since separate operations, such as a specific operation (rotation of a lever) and the like, are required to be performed, the amount of energy that can be obtained is very small relative to the inconvenience in use and a large amount of time taken. Thus, there is a problem that the conventional portable self-powered generation apparatuses are not applied to actual electric devices.

Examples of technologies for solving the above problems have been disclosed in Patent Documents 1 to 5 and Non-patent Document 1 below.

For example, as shown in FIG. 1, Patent Document 1 (Korean Patent Registration No. 10-1178592, registered on Aug. 24, 2012) discloses a gear-driving apparatus for self-powered generation by forward and reverse rotations, the gear-driving apparatus including a power generation part 30 that includes a rotator 32 and an electric induction body 38 and a gear driving part 10 that rotates the rotator 32 only in a forward direction, wherein, in the gear driving part 10, a driving pulley 6 is formed on a driving shaft 8 of the gear driving part 10 and is rotated by forward and reverse operations of a pedal, a first driving gear 12 linked with the driving pulley 6 is axially coupled with a second driving gear 14 linked with the driving pulley 6, the first driving gear 12 and the second driving gear 14 are linked and driven together by a plurality of gears, the driving pulley 6 and the second driving gear 14 include clutch bearings 6a and 14a installed therein and alternately transfer a rotational force only in a forward direction, a rotational resistance generated between the electric induction body 38 and the rotator 32, which is rotated by the driving shaft 8, is transferred to the driving pulley 6, and thus the gear-driving apparatus for self-powered generation by forward and reverse rotations has a kinetic load when a pedal is driven.

Patent Document 2 (Korean Patent Registration No. 10-1596430, registered on Feb. 16, 2016) discloses a self-powered generation apparatus including a driving shaft that is alternately rotated in forward and reverse directions by an external force, a forward power transfer part that only transfers a forward rotational force of the driving shaft to a power generation shaft, a reverse power transfer part that only transfers a reverse rotational force of the driving shaft to the power generation shaft, and a generator that generates power using a unidirectional rotational force of the power generation shaft, wherein, since a pulley is axially coupled with the driving shaft and a wire wound around the pulley of the driving shaft alternately reciprocates, the driving shaft alternately rotates in forward and reverse directions.

Patent Document 3 (Chinese Patent Publication CN 1683785A, published on Oct. 19, 2005) discloses a bidirectional power transfer device including a power input device, a unidirectional driving part, and a power output device, wherein the power input device constantly transmits a reciprocating force in two opposite directions to the unidirectional driving part, a unidirectional transfer member may be a unidirectional driving power output device, a unidirectional driving unit allows a movement direction of the power output device to correspond to transmission power while power transfer is not performed in a reverse direction, and two unidirectional transfer elements, which refer to a power input device for two unidirectional transfer members, drive the power output device according to setting for a movement direction.

Patent Document 4 (US 8,013,457, registered on Sep. 06, 2011) discloses an attraction generation apparatus having, as a structure that generates power using a wire that is wound around a bobbin and reciprocates, a structure that allows generated energy to be simultaneously output and stored in an energy source when the wire is pulled, allows the energy to be output from the energy source when the wire is loosened, and uses one clutch to rotate a rotor in one direction so as to generate power by relative rotation with a stator, such that only rotational force in one direction generates power.

Patent Document 5 (Korean Patent Registration No. 10-1162106, registered on Jun. 27, 2012) discloses a vehicle power generator including a flywheel coupled to a crankshaft of a vehicle engine, a rotor formed of a magnet coupled with the flywheel, a stator formed of a core and a coil wound around the core and disposed at an inner surface of the rotor, a stator case coupled with the stator and assembled to a housing of the engine, a guide member provided in the housing and supported by the stator case so that movement of the guide member due to a magnetic force of the magnet is prevented when the stator case is assembled to the housing, and a falling prevention member provided in the stator case to prevent the stator from falling out of the stator case.

Meanwhile, Non-patent Document 1 (Design of an Axial Flux Permanent Magnet Generator for a Portable Hand Crank Generating System (Lee, Ji-Young; Koo, Dae-Hyun; Moon, Seung-Ryul; Han, Choong-Kyu IEEE Transactions on Magnetics, vol. 48, issue 11, pp. 2977-2980) discloses a portable self-powered generation system including a crank-device part for performing unidirectional rotation with a user's hand, a speed-increasing gear part that considers improvement of overall system efficiency and noise reduction, a power generation part to which an axial flux-type brushless generator design technique is applied, and a charge/power conversion part that is chargeable at a speed greater than a minimum speed (32 rotations per minute by a crank) even when the portable self-powered generation system is driven at an irregular speed by a user such that input is changed.

### [Disclosure]

### [Technical Problem]

However, since a self-powered generation apparatus described above in Patent Document 1 is fixed and installed in one place, like a treadmill, a lat pulldown, a pendulum exercise machine, and the like, portability for outdoor use, such as military operations and the like, is low, and thus there is a problem that power generation is not performed when necessary while a user carries the self-powered generation apparatus around.

In technology disclosed in Patent Document 2, which is a self-powered generation apparatus, there are problems that components may be damaged by repeated use for a long time, and when a wire wound around a pulley is loosened, the self-powered generation apparatus cannot be operated.

Further, in technology disclosed in Patent Document 3, which is a bidirectional power transfer device, a rotational speed is increased through a plurality of speed-increasing gears due to a short stroke (a movement distance) and a small driving force, but there are problems that the configuration of the device is complicated, and energy for power generation is consumed due to a multi-stage connection structure.

Further, in a technology disclosed in Patent Document 4, which is an attraction generation apparatus, since the attraction generation apparatus has a structure in which only a rotational force generated when a wire is pulled is stored in an energy source and energy of the energy source is rather consumed when the wire is loosened, there is a problem that sufficient power is not generated and thus a battery cannot be charged.

Further, in a technology disclosed in Patent Document 5, which is a vehicle power generator, since power is generated by a flywheel being coupled with a crankshaft of a vehicle engine, as with Patent Document 1, there is a problem that power generation is not performed when necessary while a user carries the vehicle power generator around.

Further, in technology disclosed in Non-patent Document 1, since a crank-device part should be rotated in one direction while a user performs a power generation process, energy consumption is increased such that the user is tired, and thus there is a problem that power generation cannot be continuously performed for a relatively long time.

The present invention is directed to providing a portable self-powered generation apparatus which allows a user to continuously generate power with one hand or two hands or with one foot or both feet for a long time outdoors, such as in military operations, refugee camps, disasters such as an earthquake or the like, emergency situations on ships, fishing, mountain climbing, and the like, so as to charge a battery, and a module equipped with the same.

The present invention is also directed to providing a portable self-powered generation apparatus capable of being manufactured in a small size and generating power at high efficiency, and a module equipped with the same.

The present invention is also directed to providing a portable self-powered generation apparatus including first and second rotating members and first and second wires to continuously generating power even when a failure occurs on either side of the first and second rotating members and the first and second wires, and a module equipped with the same.

The present invention is also directed to providing a portable self-powered generation apparatus including a first rotating member and a second rotating member that are manufactured as identical components, a first wire and a second wire that are manufactured as identical components, and a first spring member and a second spring member that are designed and manufactured as identical components so as to reduce costs for manufacturing the power generation apparatus, and a module equipped with the same.

The present invention is directed to providing a portable self-powered generation apparatus capable of being coupled with a smart module, such as an insect/mosquito repellent device, an emergency light, a rescue signal apparatus, or the like, and being used outdoors, and a module equipped with the same.

The present invention is also directed to providing a portable self-powered generation apparatus capable of self-generating power while promoting a user's workout, and a module equipped with the same.

### [Technical Solution]

One aspect of the present invention provides a portable self-powered generation apparatus including a rotor cover member that is rotatable, first and second rotating members that rotate the rotor cover member, first and second wires that each rotate the first and second rotating members by a pulling operation, first and second spring members that perform winding operations on the first and second wires, respectively, and a power generation member that generates power according to rotation of the rotor cover member, wherein the first and second rotating members are each fitted to the rotor cover member, and the power generation member is embedded in the rotor cover member and includes a rotor that rotates according to rotation of the rotor cover member and a stator mounted in the rotor.

The rotor cover member may only rotate in one direction, and the first and second rotating members may be fitted to left and right portions or upper and lower portions of the rotor cover member, respectively.

The rotor cover member may include a rotor cover part and a rotor gear part, the rotor cover part may include a bowl-shaped cover main body, a first clutch gear provided on an outer side of the cover main body, a cover shaft having a hollow into which a shaft is inserted, and a cover stepped part provided along a circumference of an inner side of the cover main body so that the rotor is fitted to the cover stepped part, and the rotor gear part may include a disc-shaped gear main body, a second clutch gear provided at an inner side of the gear main body, and a shaft insertion part fitted to the cover shaft.

The portable self-powered generation apparatus may further include a bracket member on which the power generation member is mounted, wherein the bracket member may be provided to be spaced apart from each of the rotor cover part and the rotor gear part and include a stator mounting part to which the stator is fixed, and the stator may be screw-fastened to the stator mounting part.

The rotor may include a rotor main body spaced apart from the stator and provided in a cylindrical shape, a rotor stepped part provided at one side of the rotor main body and fitted to the cover stepped part, and a plurality of permanent magnets attached to an inner side of the rotor main body.

Each of the first and second rotating members may include a reel that maintains a wound state of the wire and is rotatable according to pulling or winding of the wire, a spring cover part that is fitted to the reel and includes the spring member embedded therein, and a locking member mounted on the spring cover part and fitted to the first clutch gear of the rotor cover part or the second clutch gear of the rotor gear part so that the rotor cover member rotates in one direction.

Each of the first and second spring members may include a spiral spring embedded in the spring cover part and a spring holder into which an end portion of a shaft is inserted, one inner end portion of the spiral spring may be inserted into the spring holder, and one outer end portion of the spiral spring may be inserted into the spring cover part.

A plurality of protrusions may be provided on an inner side of a circumference of the reel, a plurality of grooves may be provided on an outer side of a circumference of the spring cover part, and each of the plurality of protrusions may be fitted to one of the plurality of grooves to be integrally rotatable.

An insertion part into which the one outer end portion of the spiral spring is inserted may be provided on the circumference of the spring cover part, and a seating part on which the one outer end portion of the spiral spring, which is inserted through the insertion part, is seated may be provided on an outer side of the spring cover part.

The portable self-powered generation apparatus may further include a cover member that accommodates the rotor cover member, the first and second rotating members, the first and second wires, and the first and second spring members, wherein the cover member includes an upper cover and a lower cover that are separable.

The spring holder may include a protrusion, wherein the protrusion is inserted into a concave part provided in the cover member to block rotation of the spring holder.

A pulling state of the wire may be controlled by an elastic force of the spiral spring.

The spring cover part may include a support protrusion that supports rotation of the locking member and a pair of protrusions fitted to the locking member around the support protrusion, the locking member may be provided as a pair of locking members around the support protrusion, and the locking member may be fitted to the first clutch gear or the second clutch gear on the same plane as the rotor cover part or the rotor gear part.

The first rotating member, the first wire, and the first spring member may be operated independently of the second rotating member, the second wire, and the second spring member.

Another aspect of the present invention provides a module equipped with the portable self-powered generation apparatus according to the present invention, the module including a portable self-powered generation apparatus, a main body that accommodates the portable self-powered generation apparatus, a bottom member that is coupled to the main body and fixes the portable self-powered generation apparatus, and a first handle and a second handle that are coupled to first and second wires, respectively.

The module may further include at least one of a battery that is mounted in the main body and is charged with electricity generated by the power generation apparatus, a light emitting device connected to the battery, and a Universal Serial Bus (USB) terminal connected to the battery.

A screw-coupled structure may be provided on an upper portion of the main body, and the main body may be coupled to at least one of an insect/mosquito repellent device module, an emergency light module, a rescue signal apparatus module, a heater module, a cooler module, and the like that are allowed to be fastened in a screw-coupling manner.

### [Advantageous Effects]

According to a portable self-powered generation apparatus and a module equipped with the same according to the present invention, since a motor or the like is not provided and a power generation member is provided in a rotor cover member that is rotatable, it is possible to reduce the size and weight of the portable self-powered generation apparatus.

Further, according to the portable self-powered generation apparatus and the module equipped with the same according to the present invention, since a rotor cover member that is rotatable in one direction, a first rotating member and a second rotating member that rotate the rotor cover member, and a first wire and a second wire that each rotate the first and second rotating members by a pulling operation are provided, a user can continuously generate a large amount of power at high efficiency for a long time in a relatively comfortable state by repeatedly pulling wires with one hand or two hands.

Further, according to the portable self-powered generation apparatus and the module equipped with the same according to the present invention, since the first and second rotating members in which the first and second spring members are embedded are fitted to the left and right portions or upper and lower portions of the rotor cover member, it is possible to reduce the size of the portable self-powered generation apparatus.

Further, according to the portable self-powered generation apparatus and the module equipped with the same according to the present invention, since a locking member is inserted into the rotor cover member, it is possible to prevent the locking member from falling out, and, since the spring member is embedded in the rotating member, it is possible to prevent damage to components.

Further, according to the portable self-powered generation apparatus and the module equipped with the same according to the present invention, since the first and second rotating members and the first and second wires are provided, even when any one of the rotating members and wires are damaged when used for a long time, self-powered generation can be performed continuously using the other one of the rotating members and the wires.

Further, according to the portable self-powered generation apparatus and the module equipped with the same according to the present invention, since the first and second rotating members are manufactured as identical components, the first and second wires are manufactured as identical components, and the first and second spring members are manufactured as identical components, costs for designing and manufacturing components can be reduced, and costs for manufacturing the self-powered generation apparatus can be reduced.

Further, according to the portable self-powered generation apparatus and the module equipped with the same according to the present invention, since a plurality of through portions are provided in each of a rotor cover part, a rotor gear part, and a bracket member, it is possible to reduce the weight of the self-powered generation apparatus.

Further, according to the portable self-powered generation apparatus and the module equipped with the same according to the present invention, since an insect/mosquito repellent device module, an emergency light module, a rescue signal apparatus module, a heater module, a cooler module, and the like may be used by being coupled to the main body, expansion of electric devices can be promoted.

Further, since a predetermined repulsive force is generated when a pulling wire (a wire) is pulled for operation by the portable self-powered generation apparatus and the module equipped with the same according to the present invention, and there is an effect of workout when a user pulls the pulling wire with a force greater than the repulsive force, health of the user can be promoted by displaying an amount of exercise of the user according to power being generated by the user operating the first and second handles.

### [Description of Drawings]

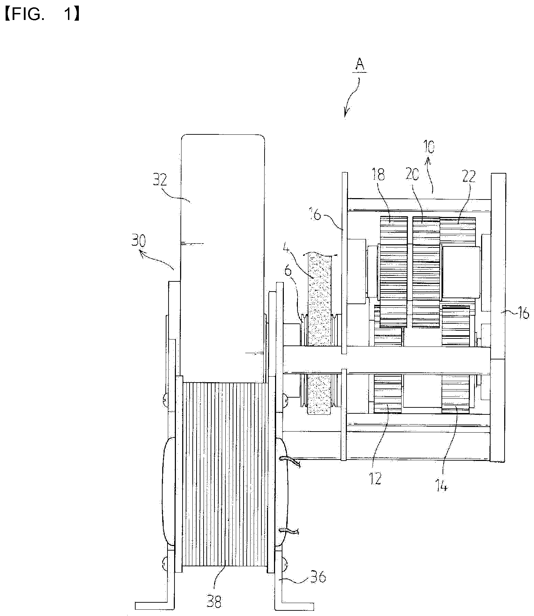

FIG. 1 is a perspective view of a conventional gear-driving apparatus for self-powered generation.
FIG. 2 is an exterior perspective view of a portable self-powered generation apparatus according to the present invention.
FIG. 3 shows front and lateral cross-sectional views of the portable self-powered generation apparatus shown in FIG. 2.
FIG. 4 is an exploded perspective view of the portable self-powered generation apparatus shown in FIG. 2.
FIG. 5 is an enlarged exploded perspective view of main parts of the portable self-powered generation apparatus shown in FIG. 4.
FIG. 6 is an exploded perspective view for describing configurations of a rotor cover member, a bracket member, and a rotating member of the portable self-powered generation apparatus according to the present invention.
FIG. 7 is an enlarged exploded perspective view of a rotating member and a rotor according to the present invention.
FIG. 8 is a perspective view of a rotor cover part applied to the present invention.
FIG. 9 is a perspective view of a rotor gear part applied to the present invention.
FIG. 10 is a perspective view of a bracket member applied to the present invention.
FIG. 11 is a perspective view illustrating a state of an inside of an upper cover applied to the present invention.
FIG. 12 is a perspective view for describing a rotational state of a rotor cover member according to the present invention.
FIG. 13 is a view for describing a state in which a locking member is fitted to a rotor gear part.

### [Modes of the Invention]

The above and other objects and novel features of the present invention will become more apparent from the descriptions of the present specification and the accompanying drawings.

In descriptions of a portable self-powered generation apparatus according to the present invention, first and second rotating members, first and second wires, and first and second spring members, which are provided on the left and right portions or upper and lower portions of the rotor cover member, may be described as a pair of rotating members, a pair of wires, and a pair of spring members.

Further, since the first rotating member, the first wire, and the first spring member are operated independently of the second rotating member, the second wire, and the second spring member, the first rotating member and the second rotating member are manufactured as identical components, the first wire and the second wire are manufactured as identical components, and the first spring member and the second spring member are manufactured as identical components, instead of descriptions of each of the first and second rotating members, the first and second wires, and the first and second spring members, any one of the first and second rotating members, the first and second wires, and the first and second spring members will be described using symbols simply made to correspond to both the rotating members, both the wires, and both the spring members.

Hereinafter, a configuration of the present invention will be described with reference to the accompanying drawings.

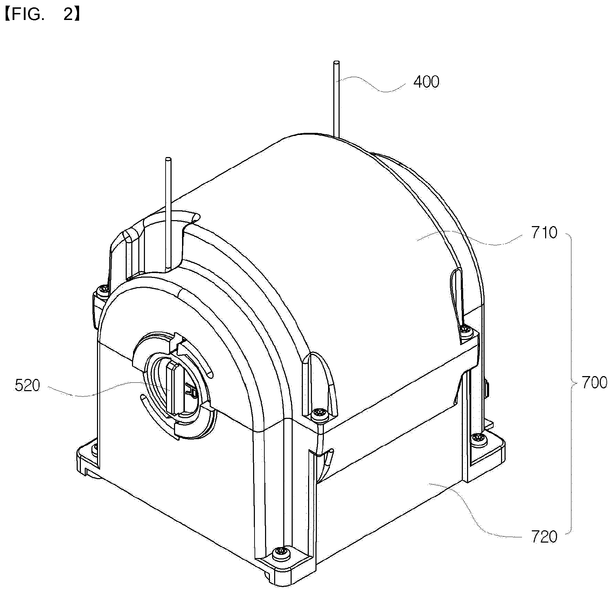

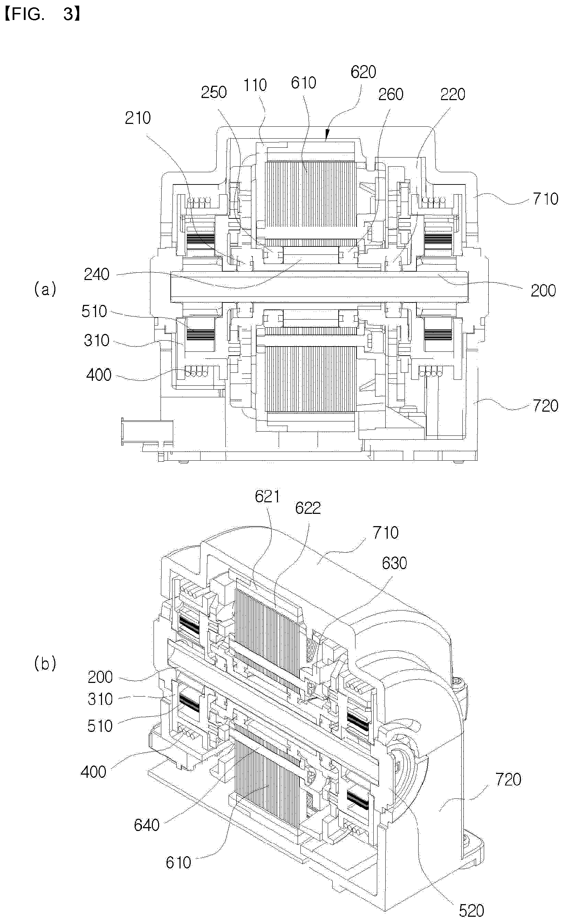

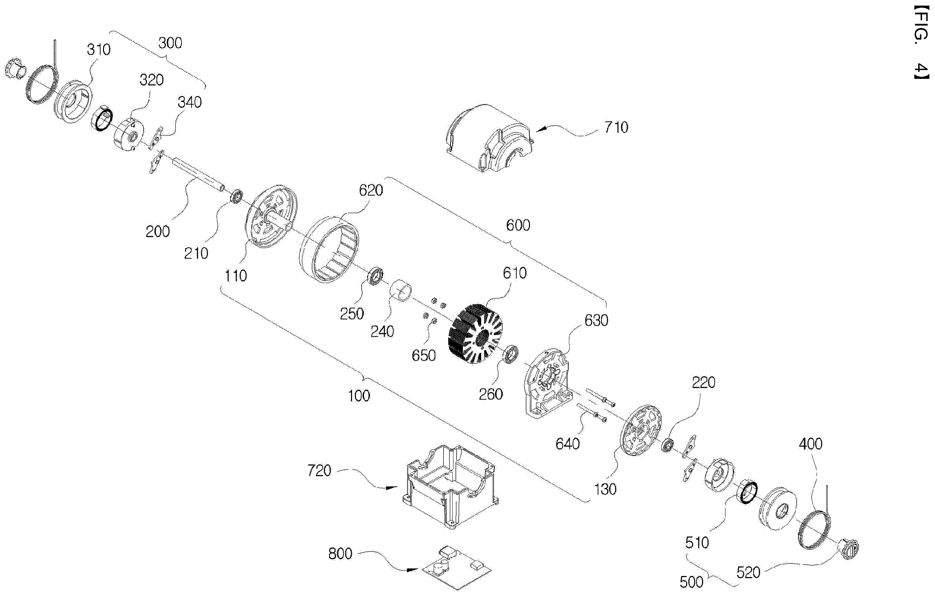

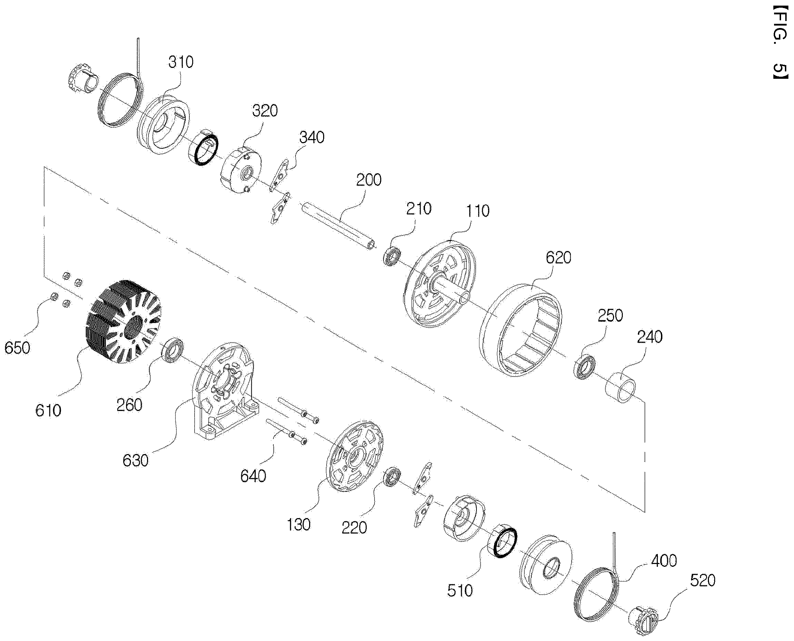

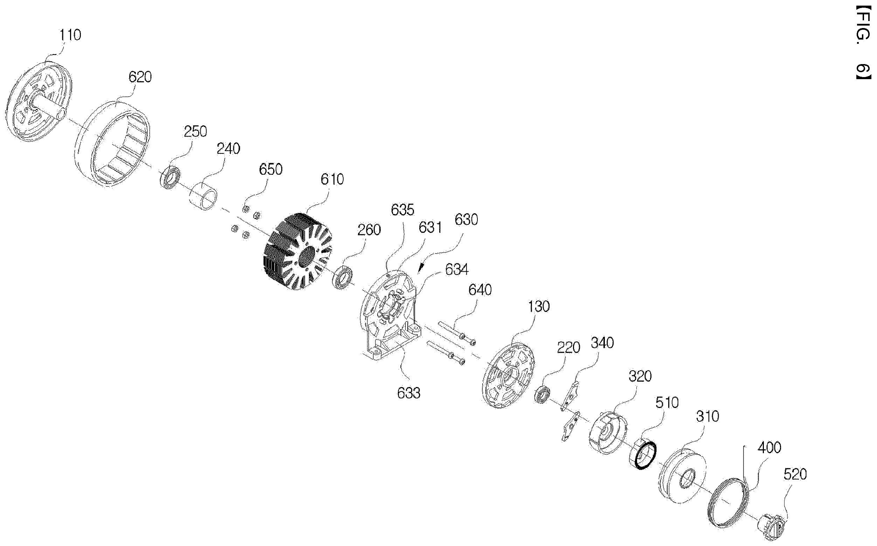

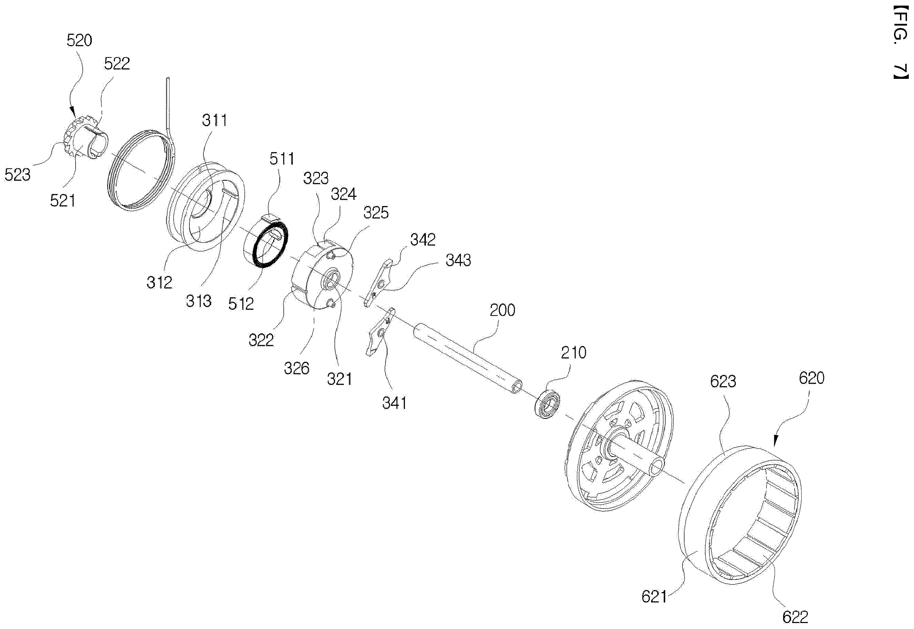

FIG. 2 is an exterior perspective view of a portable self-powered generation apparatus according to the present invention, FIG. 3 shows front and lateral cross-sectional views of the portable self-powered generation apparatus shown in FIG. 2, FIG. 4 is an exploded perspective view of the portable self-powered generation apparatus shown in FIG. 2, FIG. 5 is an enlarged exploded perspective view of main parts of the portable self-powered generation apparatus shown in FIG. 4, FIG. 6 is an exploded perspective view for describing configurations of a rotor cover member, a bracket member, and a rotating member of the portable self-powered generation apparatus according to the present invention, and FIG. 7 is an enlarged exploded perspective view of a rotating member and a rotor according to the present invention.

As shown in FIGS 2 to 4, the portable self-powered generation apparatus according to the present invention includes a rotor cover member 100 that is rotatable, a shaft 200 inserted into the rotor cover member 100, first and second rotating members 300 that rotate the rotor cover member 100, first and second wires 400 that rotate the first and second rotating members 300 through pulling operations, first and second spring members 500 that perform winding operations on each of the first and second wires 400, a power generation member 600 that generates power according to rotation of the rotor cover member 100, and a cover member 700 that accommodates the rotor cover member 100, the first and second rotating members 300, the first and second wires 400, and the first and second spring members 500. The power generation member 600 is embedded in the rotor cover member 100 and includes a rotor 620 that rotates according to rotation of the rotor cover member 100 and a stator 610 mounted in the rotor 620. Also, a printed circuit board (PCB) 800 on which an electric circuit of a battery or the like that is charged with power generated by the power generation member 600 is provided is mounted on a lower portion inside the cover member 700.

As shown in FIG. 4, the first and second rotating members 300, in which the first and second spring members 500 are embedded, respectively, and the first and second wires 400 are provided on the left and right portions of the rotor cover member 100. Since the first and second spring members 500 are formed as identical components, the first and second rotating members 300 are formed as identical components, and the first and second wires 400 are formed as identical components, the following descriptions will be given based on either one of them. Also, in the present invention, unlike the conventional technology, since the pair of rotating members 300 and the pair of wires 400 are provided, even when any one of the rotating members 300 or any one of the wires 400 are damaged when used for a long time, the other one of the rotating members 300 or the other one of the wires 400 may be used without a stop, and thus a preliminary function may be provided. Also, since the pair of rotating members 300 are formed as identical components, the pair of wires 400 are formed as identical components, and the pair of spring members 500 are formed as identical components, costs for designing and manufacturing components can be reduced, and costs for manufacturing a self-powered generation apparatus can be reduced.

In addition, in the structure shown in FIG. 4, the first and second rotating members 300 are provided on the left and right sides of the rotor cover member 100, but the present invention is not limited thereto. In the structure in which the rotor cover member 100 is recumbent, the first and second rotating members 300 may be provided on upper and lower sides of the rotor cover member 100.

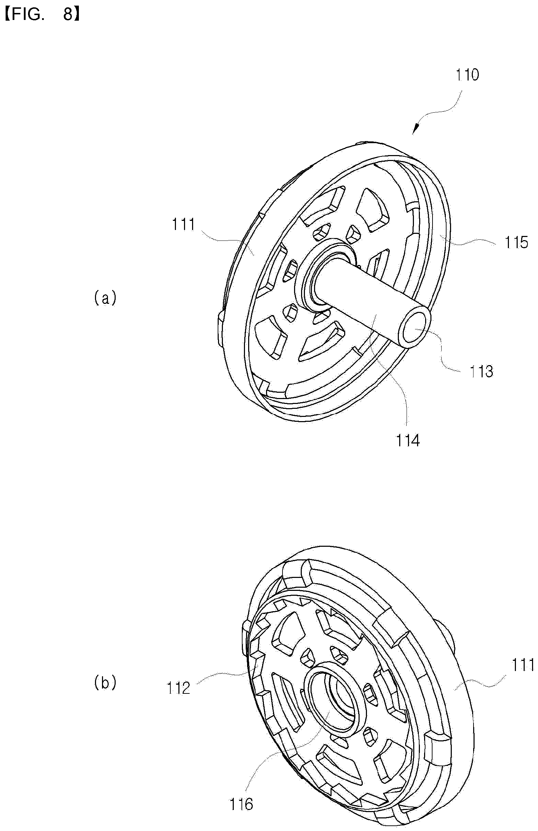

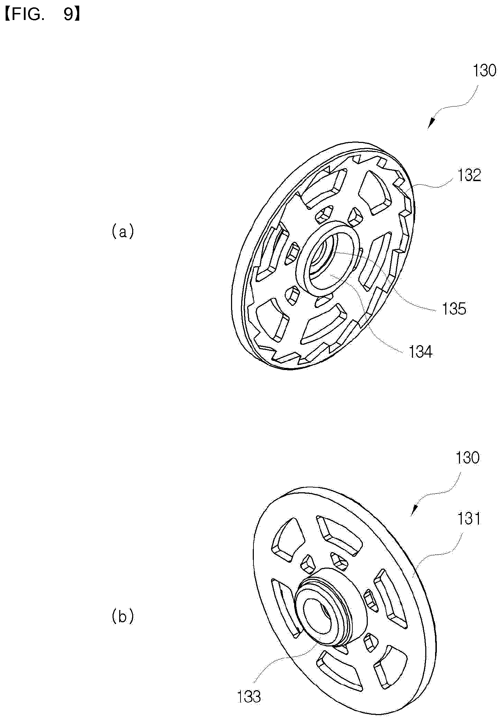

The rotor cover member 100 only rotates in one direction and, as shown in FIGS. 4 to 6, includes a rotor cover part 110 and a rotor gear part 130. The rotor cover part 110 and the rotor gear part 130 will be described below with reference to FIGS. 8 and 9.

FIG. 8 is a perspective view of a rotor cover part applied to the present invention, and FIG. 9 is a perspective view of a rotor gear part applied to the present invention.

As shown in FIG. 8, the rotor cover part 110 includes a bowl-shaped cover main body 111 that is made of polycarbonate, which is an engineering plastic, a first clutch gear 112 formed of a plurality of sawteeth and disposed at an outer side of the cover main body 111, a cover shaft 114 having a hollow 113 into which the shaft 200 is inserted, a cover stepped part 115 provided along a circumference of an inner side of the cover main body 111 so that the rotor 620 is fitted to the cover stepped part 115, and a first bearing insertion groove 116 provided at a central portion of an outer side of the cover main body 111 so as to communicate with the hollow 113. In the first clutch gear 112, each of the sawteeth is formed to be inclined in one direction, for example, in a shape that protrudes at an angle of 60 to 80°.

Also, as shown in FIG. 8, a plurality of through portions may be provided along a circumference of the cover shaft 114 inside the cover main body 111 of the rotor cover part 110. In this way, the weight of the rotor cover part 110 itself can be reduced, and thus the weight of the portable self-powered generation apparatus can be reduced.

The rotor gear part 130 is made of the same material as the rotor cover part 110 and is formed in a disc shape. As shown in FIG. 9, the rotor gear part 130 includes a disc-shaped gear main body 131, a second clutch gear 132 provided at an inner side of the gear main body 131 in the same direction as the first clutch gear 112 and formed of sawteeth, a shaft insertion part 133 fitted to the cover shaft 114, a second bearing insertion groove 134 provided at a central portion of an inner side of the gear main body 131 so as to communicate with the hollow 113, and a catching protrusion 135 provided in the second bearing insertion groove 134. In the second clutch gear 132, as in the first clutch gear 112, each of the sawteeth is formed to be inclined in one direction, for example, in a shape that protrudes at an angle of 60 to 80°.

Also, as shown in FIG. 9, a plurality of through portions may be provided along a circumference of the second bearing insertion groove 134 inside the gear main body 131 of the rotor gear part 130. In this way, the weight of the rotor gear part 130 itself can be reduced, and thus the weight of the portable self-powered generation apparatus can be reduced.

A first bearing 210 may be inserted into the first bearing insertion groove 116 and a second bearing 220 may be inserted into the second bearing insertion groove 134 so that, regardless of the shaft 200, a rotational force of the rotor cover part 110 and the rotor gear part 130 may be transmitted to the rotor 620. That is, the first bearing 210 and the second bearing 220 are provided to prevent rotation interference due to the shaft 200.

As described above, the rotor cover member 100 applied to the present invention is formed of engineering plastic, unlike a one-way clutch used for a general mechanical device or vehicle components that is manufactured using metal and a bearing so as to be able to rotate at a high speed. That is, in the present invention, the rotor cover member 100 is accelerated by the first clutch gear 112 and the second clutch gear 132, which are provided in the rotor cover part 110 and the rotor gear part 130, respectively. Therefore, since the rotor cover member 100 performs power generation at hundreds of RPMs, which is less than thousands of RPMs corresponding to the high speed of the one-way clutch, instead of being formed using a metal material, the rotor cover part 110 and the rotor gear part 130 may be formed of engineering plastic (ACETAL), whose durability and wear resistance are higher than those of ordinary plastic (acrylonitrile butadiene styrene (ABS) or the like), such that the rotor cover member 100 may stably generate power while being lightweight and having a small size.

The shaft 200 is made of, for example, stainless steel.

As shown in FIGS. 4 and 7, the pair of rotating members 300 are provided to be fitted to left and right portions of the rotor cover member 100. That is, each of the pair of rotating members 300 includes a reel 310 that maintains a wound state of the wire 400 and is rotatable according to pulling or winding of the wire, a spring cover part 320 that is fitted to the reel 310 and includes the spring member 400 embedded therein, and a pair of locking members 340 mounted on the spring cover part 320 and fitted to the first clutch gear 112 of the rotor cover part 110 and the second clutch gear 132 of the rotor gear part 130, respectively, so that the rotor cover member 100 rotates in one direction.

Also, the spring member 500 includes a spiral spring 510 that is embedded in the spring cover part 320 and a spring holder 520 into which an end portion of the shaft 200 is inserted.

As shown in FIG. 7, the reel 310 has a reel shape to maintain the wire 400 in the wound state, a first hole part 311 into which the spring holder 520 is inserted and an accommodation part 312 for having the spring cover part 320 embedded therein are provided at a central portion of the reel 310, and plurality of protrusions 313 to which the spring cover part 320 is fitted are provided at an inner side of the reel 310. In FIG. 7, the plurality of protrusions 313 are provided as the pair of protrusions 313, but the present invention is not limited thereto, and there may be three of more of the protrusions 313.

As shown in FIGS. 4 and 7, the spring cover part 320 has a hollow cylindrical shape to keep the spiral spring 510 inside, a second hole part 321 into which the spring holder 520 is inserted is provided at a central portion of the spring cover part 320, a plurality of grooves 322 are formed at an outer side of the spring cover part 320 to correspond to the plurality of protrusions 313 so that the plurality of protrusions 313 are fitted to the plurality of grooves 322, and an insertion part 323 into which one outer end portion 511 of the spiral spring 510 is inserted and a seating part 324 on which one outer end portion inserted through the insertion part 323 is seated are provided at a circumferential portion of the spring cover part 320. Therefore, since the one outer end portion 511 of the spiral spring 510 is fitted to the accommodation part 312 of the reel 310 while being seated on the seating part 324 through the insertion part 323, the one outer end portion 511 of the spiral spring 510 may be prevented from falling out of the spring cover part 320. Also, as shown in FIG. 7, a support protrusion 326 that protrudes in a cylindrical shape and supports rotation of the locking member 340 is provided around the second hole part 321 of the spring cover part 320, and a pair of protrusions 325 to which the locking member 340 is fitted are provided around the support protrusion 326. Each of the pair of protrusions 325 is formed in two stages to have a step.

As shown in FIGS. 5 and 7, the locking member 340 is provided as a pair of locking members 340, and each of the locking members 340 includes openings 341 fitted to the pair of protrusions 325, claw parts 342 engaged to the sawteeth of the first clutch gear 112 and the second clutch gear 132, and a circular arc part 343 that has a semi-circular shape to correspond to the cylindrical support protrusion 326. The openings 341 are formed in two stages corresponding to the protrusions 325 formed in two stages so that the fitted state between the spring cover part 320 and the locking members 340 is firmly maintained. As shown in FIG. 7, each of the claw parts 342 has a step to transmit a sufficient rotational force to the first clutch gear 112 and the second clutch gear 132. The locking members 340 are fitted to the first clutch gear 112 and the second clutch gear 132 on substantially the same plane as the rotor cover part 110 and the rotor gear part 130. Therefore, since the pair of rotating members 300 in which the spring member is embedded are fitted to the left and right portions of the rotor cover member 100 in the portable self-powered generation apparatus according to the present invention, it is possible to reduce the size of the portable self-powered generation apparatus.

The wire 400 is made of a metal material or a fiber material but may be made of any other material as long as the material is able to perform a function of winding or unwinding on the reel 310. The material of the wire 400 is not limited to a specific material. One end portion of the wire 400 may be fixed to the reel 310, and the other end portion of the wire 400 may be fixed to a handle described below. Therefore, a pulled state of the wire 400 may be controlled by an elastic force of the spiral spring 510.

The spiral spring 510 is made of a spring steel and maintains a state of a spring wound, for example, about 8 to 12 times. One outer end portion 511 of the spiral spring is inserted into the insertion part 323 formed in the spring cover part 320, and one inner end portion 512 of the spiral spring 510 is inserted into the spring holder 520. The spiral spring 510 is maintained in the wound state, and correspondingly, the wire 400 is also maintained in a state in which the wire 400 is wound around the reel 310. Therefore, pulling of the wire 400 by a user is restricted according to an unwinding condition of the spiral spring 510, and the wire 400 is restored to the state in which the wire 400 is wound around the reel 310 by a restoring force of the spiral spring 510.

As shown in FIG. 7, the spring holder 520 includes a protrusion 521 that has a hollow so that one end portion of the shaft 200 is inserted thereinto, wherein the protrusion 521 includes a cut-out part 522 to which the one inner end portion 512 of the spiral spring 510 is fitted and fixed. Therefore, since one end portion of the shaft 200 is fitted to the hollow while the one inner end portion 512 of the spiral spring 510 is inserted into the cut-out part 522, it is possible to prevent the one inner end portion 512 of the spiral spring 510 from falling out of the protrusion 521. Also, as shown in FIGS. 3 and 7, the spring holder 520 includes a protrusion 523 provided to block rotation of the spring holder 520. That is, since, as shown in FIG. 3, the protrusion 523 is inserted into and fixed to a concave part 730 provided in the cover member 700, rotation of the spring holder 520 is blocked by the protrusion 523. Also, by the protrusion 523 being mounted to be fixed to the cover member 700, the rotor cover member 100 and the rotating member 300 may maintain a gap therebetween so that the rotor cover member 100 and the rotating member 300 are rotatable in the cover member 700.

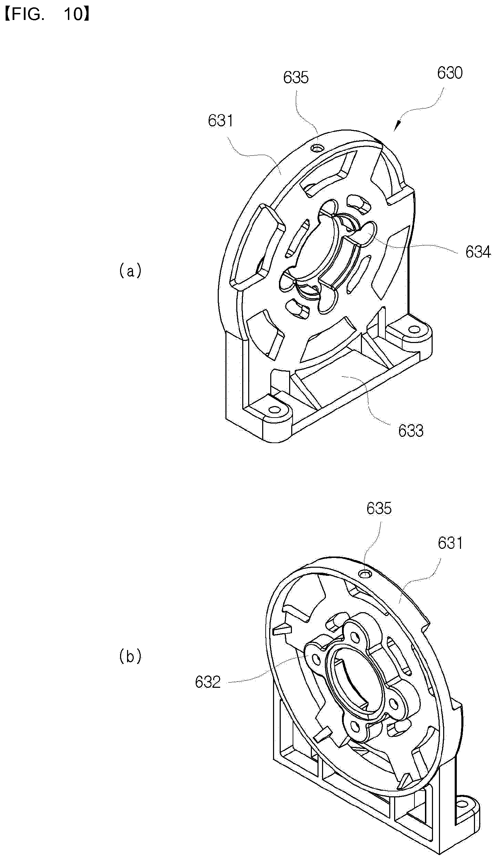

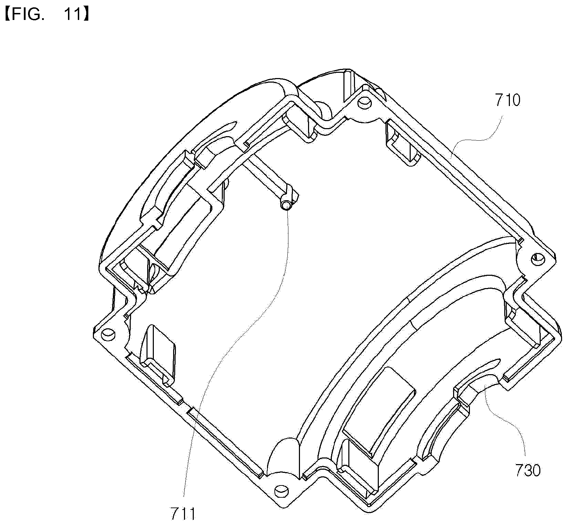

As shown in FIGS 6, 7, and 10, the power generation member 600 includes a stator 610, a rotor 620, and a bracket member 630 on which the rotor 620 and the stator 610 are mounted. FIG. 10 is a perspective view of the bracket member 630 applied to the present invention, and FIG. 11 is a perspective view illustrating a state of an inside of an upper cover 710 applied to the present invention.

The stator 610 includes a core having a hollow and coupled to the bracket member 630 and a coil wound around the core. The number of windings of the coil may vary according to the power generation capacity, the size of the portable self-powered generation apparatus, and the like, and thus is not limited to a specific number of windings. As shown in FIG. 3, a ring member 240 is inserted into the hollow of the stator 610 so that the stator 610 is not affected by rotation of the shaft 200, and bearings 250 and 260 are inserted into both sides of the ring member 240, respectively. The coil is connected to the PCB 800 through the bracket member 630 for charging.

As shown in FIG. 7, the rotor 620 includes a rotor main body 621 spaced apart from the stator 610 in a circumferential direction thereof and provided in a cylindrical shape, a rotor stepped part 623 provided at one side of the rotor main body 621 and fitted to the cover stepped part 115, and a plurality of permanent magnets 622 attached to an inner side of the rotor main body 621 Therefore, when magnetic poles formed by the permanent magnets 622 of the rotor 620 rotate, every time an N pole and an S pole rotate around a core, a set of positive and negative changes on an alternating current is completed one time. Since a frequency of an electromotive force obtained by a conductor is 1 Hz when the magnetic poles formed by the permanent magnets 622 rotate at a speed of 1 revolution per second, the electromotive force may be increased every one revolution according to an increase in the number of magnetic poles of the rotor 620. In the present invention, like the above-described number of windings of the coil, the number of magnetic poles of the rotor 620 may vary according to the power generation capacity, the size of the portable self-powered generation apparatus, and the like, and thus is not limited to a specific number of magnetic poles.

As shown in FIG. 10, the bracket member 630 includes a bracket main body 631 provided to be spaced apart from each of the rotor cover part 110 and the rotor gear part 130, a stator mounting part 632 to which the stator 610 is fixed, a support part 633 screw-coupled to a lower cover 720, a fastening groove 634 for screw-coupling the stator 610, and a protrusion groove 635 into which a protrusion 711 of the upper cover 710 shown in FIG. 11 is inserted, wherein, as shown in FIGS. 3 and 4, the stator 610 is fixed to the stator mounting part 632 by screw fastening using a bolt 640 and a nut 650.

Also, as shown in FIG. 10, a plurality of through portions are provided along an inner circumference of an inside of the bracket main body 631 of the bracket member 630. In this way, the weight of the bracket member 630 itself can be reduced, and thus the weight of the portable self-powered generation apparatus can be reduced.

As shown in FIGS. 2 to 4, the cover member 700 includes the upper cover 710 and the lower cover 720 that are provided to be separable. Each of the upper cover 710 and a lower cover 720 includes an accommodation part that has a shape corresponding to the shapes of the rotor cover member 100 and the pair of rotating members 300 and accommodates the rotor cover member 100 and the pair of rotating members 300 such that the rotor cover member 100 and the pair of rotating members 300 are spaced apart from each other. The shape of the accommodation part is not limited to a specific shape, and the accommodation part may have any other shape as long as the shape allows size reduction to be achieved and has a space that allows the rotor cover member 100 and the pair of rotating members 300 to be rotatable. Also, the upper cover 710 or the lower cover 720 has holes through which front end portions of the pair of wires 400 may be withdrawn. The holes are not limited to a specific condition and may be in any condition as long as damage to the wires is prevented during an operation in which the wires 400 are pulled or wound.

Also, as shown in FIGS. 3A and 3B, since the protrusion 523 of the spring holder 520 is inserted into and fixed to a concave part 730 provided by the upper cover 710 and the lower cover 720, one inner end portion 512 of the spiral spring 510 may be fixed so as not to rotate. In this way, since the protrusion 523 is fixed by the upper cover 710 and the lower cover 720, the rotor cover member 100 and the rotating member 300 may maintain a gap therebetween so that the rotor cover member 100 and the rotating member 300 are rotatable in the upper cover 710 and the lower cover 720. Also, as shown in FIG. 11, the protrusion 711 may be provided at a central portion of an inside of the upper cover 710 so as to fix the bracket member 630 from an upper portion thereof, and the protrusion 711 may be fitted to the protrusion groove 635 and more securely fix the stator 610.

Also, as shown in FIG. 2, the lower cover 720 includes a leg member that is screw-fixed to a bottom member of a module equipped with a portable self-powered generation apparatus.

Next, a coupling relationship between the rotor cover member 100 and the rotating members 300 will be described.

To assemble the portable self-powered generation apparatus according to the present invention, the ring member 240 is inserted into the hollow of the stator 610, the bearings 250 and 260 are inserted into both sides of the ring member 240, respectively, the shaft 200 is inserted into the ring member 240 and the bearings 250 and 260, and then the stator 610 is fixed to the stator mounting part 632 of the bracket member 630 by using the bolt 640 and the nut 650. The insertion of the shaft 200 may also be performed after the bracket member 630 and the stator 610 are screw-fastened to each other.

Then, while the rotor 620 is inserted into the rotor cover part 110, the rotor cover part 110 is fitted to one side of the shaft 200 inserted into the stator 610, and the rotor gear part 130 is fitted to the other side of the shaft 200, thereby allowing the rotor cover member 100 to be assembled. By the assembly, the power generation member 600 is embedded in the rotor cover member 100.

Then, to assemble one of the spring members 500 and one of the rotating members 300, at one side of the rotor cover member 100, the wire 400 is inserted into the mounted reel 310, the one inner end portion 512 of the spiral spring 510 is fitted to the cut-out part 522 of the spring holder 520, one end portion of the shaft 200 is fitted to the spring holder 520, and the locking member 340 is fitted to the pair of protrusions 325 while the one outer end portion 511 of the spiral spring 510 is seated on the seating part 324 through the insertion part 323 of the spring cover part320. Then, at the other side of the rotor cover member 100, the other one of the spring members 500 is assembled to the other one of the rotating members 300, thereby allowing the rotor cover member 100 to be coupled to the pair of rotating members 300 as shown in FIG. 3.

In this way, by causing the rotor cover member 100 and the pair of rotating members 300 coupled to each other to be seated on the lower cover 720, covering the lower cover 720 by the upper cover 710, and screw-fastening the upper cover 710 and the lower cover 720 to each other, the portable power generation apparatus according to the present invention is formed.

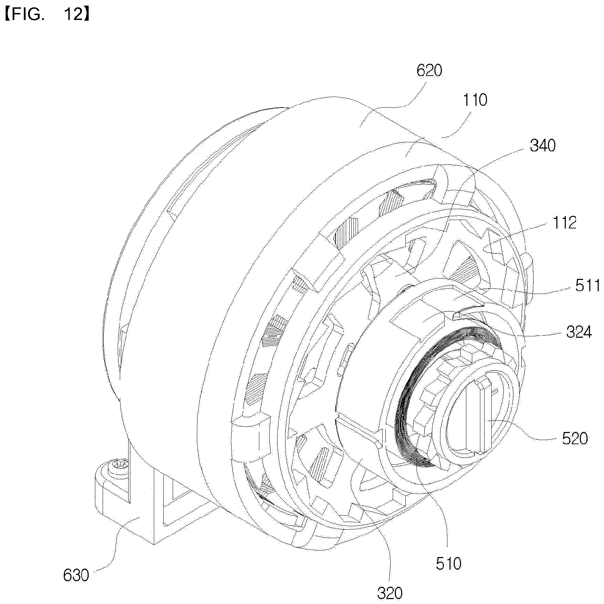

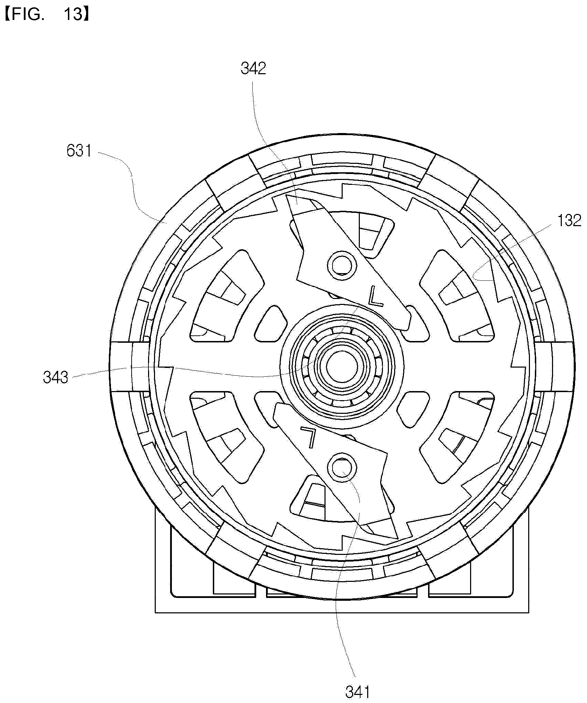

Next, the coupling state of the rotor cover member 100 and the rotating members 300 and rotation of the rotor cover member 100 will be described with reference to FIGS. 12 and 13.

FIG. 12 is a perspective view for describing a rotational state of the rotor cover member according to the present invention, and FIG. 13 is a view for describing a state in which the locking members are fitted to the rotor gear part.

In FIGS. 12 and 13, configuration of the wire 400 is omitted to clearly show the coupling relationship. Also, FIG. 12 shows a state of the rotor gear part 130 when viewed from the rotating member 300, and FIG. 13 shows a state of the locking member 340 when viewed from the rotor gear part 130.

As shown in FIGS. 3 and 12, the first clutch gear 112 of the rotor cover part 110 or the second clutch gear 132 of the rotor gear part 130 may be maintained to be engaged with the locking members 340. That is, each of the sawteeth of the first clutch gear 112 and the second clutch gear 132, which are formed to be inclined in one direction, is maintained to be engaged with an angular portion of each of the claw parts 342 of the locking members 340. Therefore, when, from the state shown in FIG. 13, the rotating members 300 rotate clockwise, that is, the locking members 340 rotate clockwise, due to the wires 400 being pulled, the second clutch gear 132 engaged with the claw parts 342 also rotate clockwise.

Meanwhile, when a user stops pulling the wire 400, the wire 400 is wound around the reel 310 by an elastic force of the spring member 500, and the rotating member 300 rotates counterclockwise from the state shown in FIG. 12. That is, when the rotating member 300 rotates counterclockwise from the state shown in FIG. 13, each of the claw parts 342 is disengaged from each of the sawteeth of the second clutch gear 132, and thus the rotor gear part 130 does not rotate. Therefore, the rotor cover member 100 according to the present invention only rotates in one direction, for example, clockwise, from the state shown in FIG. 13.

A module equipped with the portable self-powered generation apparatus according to the present invention may also be provided.

That is, the module equipped with the portable self-powered generation apparatus according to the present invention includes a main body that accommodates the portable self-powered generation apparatus, a cover that is screw-fastened to an upper portion of the main body, a bottom member that is coupled to the main body and fixes the portable self-powered generation apparatus, a hook that fixes the main body to a branch, a belt member, or the like during, for example, mountain climbing, and a pair of handles that are coupled to the pair of wires 400 and allow a user to alternately pull the wires 400 with two hands. For example, a screw-coupling groove is provided in the bottom member, and the leg member shown in FIG. 3 is screw-fastened to the groove, thereby allowing the portable self-powered generation apparatus to be firmly fixed.

A lower portion of the hook may be fitted to the bottom member, and an upper portion of the hook may be provided as a part of screw threads provided at an upper portion of the main body. Thus, by being screw-coupled to the cover, the hook may be firmly fixed to one side of the main body.

The hook is provided for coupling of a separately-provided belt member. By coupling the belt member to the hook and allowing the user to fix the belt member to a foot of the user, an arm of another user, a tree, or the like and then alternately pull the pair of handles, power generation may be performed by the wires 400.

Also, a structure in which the belt member is embedded in the main body may be used.

Also, a battery that is charged with electricity generated by the power generation member 600 may be embedded in the bottom member, a light emitting diode (LED) light emitting device may be provided between the pair of handles, and the PCB 800 for electrically controlling a charge state of the battery and the light emitting device may be mounted on the bottom member. A Universal Serial Bus (USB) terminal provided on a side surface of the main body may be mounted on the PCB 800. Therefore, power may be supplied to an electrical device connected through the USB terminal, e.g., a smart phone, a laptop, a military or emergency communication device, a lighting device or a heater such as a hand warmer and an electric burner.

The belt member and the USB cable may be embedded in an accommodation space which is, for example, provided between the main body and the cover. The LED light emitting device may provide a function of, for example, displaying a charge state of the battery and displaying a user's workout calorie burn amount due to the user operating the pair of handles.

Also, an example of the light emitting device has been described above, but the present invention is not limited thereto. An insect/mosquito repellent device, an emergency light, a rescue signal apparatus, or the like, which uses power, may be mounted instead of the light emitting device.

Also, since an upper portion of the main body that accommodates the portable self-powered generation apparatus according to the present invention is provided as a structure for screw-coupling, an insect/mosquito repellent device module, an emergency light module, a rescue signal apparatus module, a heater module, a cooler module, and the like, which may be screw-coupled, may be coupled to the upper portion of the main body for use.

Next, an operation of the module equipped with the portable self-powered generation apparatus according to the present invention will be described. Also, in the following descriptions, for convenience of description, rotation due to an operation in which a wire is pulled will be referred to as forward rotation, and rotation due to an operation in which the wire is wound will be referred to as reverse rotation.

First, when the hook mounted on the main body using the belt member is fixed to a foot of a user, and a right handle of the pair of handles is pulled, the first wire is pulled, and the reel 310 of the first rotating member rotates forward as a result. As the reel 310 of the first rotating member rotates forward, the spring cover part 320 of the first rotating member, which includes the plurality of grooves 322 into which the plurality of protrusions 313 of the reel 310 are fitted, rotates forward in the same direction as the reel 310 of the first rotating member. Also, as the spring cover part 320 rotates forward, the locking members 340 of the first rotating member fitted to the plurality of protrusions 325 of the spring cover part 320 of the first rotating member rotate forward. As the locking members 340 of the first rotating member rotate forward, the first clutch gear 112 engaged with the claw parts 342 of the locking members 340 rotates forward, and, as the first clutch gear 112 rotates, the cover main body 111 rotates forward. Then, as the cover main body 111 rotates forward, the rotor 620 fitted to the cover stepped part 115 rotates forward, and, corresponding to the forward rotation of the rotor 620, a magnetic force is generated in the stator 610 such that power is generated. The battery provided on the PCB is charged with the power generated as above.

As described above, a process in which a user pulls the right handle is controlled by an elastic force of the spiral spring 510. Accordingly, the user naturally stops the process of pulling the right handle and performs a process of pulling the left handle.

When the process of pulling the right handle is stopped, the first wire 400 is wound around the reel 310 of the first rotating member by an elastic force of the spiral spring 510, and the reel 310 of the first rotating member rotates in the reverse direction as a result. As the reel 310 of the first rotating member rotates in the reverse direction, the spring cover part 320 of the first rotating member, which includes the plurality of grooves 322 into which the plurality of protrusions 313 of the reel 310 are fitted, rotates in the reverse direction like the reel 310 of the first rotating member. Also, as the spring cover part 320 rotates in the reverse direction, the locking members 340 of the first rotating member fitted to the plurality of protrusions 325 of the spring cover part 320 of the first rotating member rotate in the reverse direction. As the locking members 340 of the first rotating member rotate in the reverse direction, the claw parts 342 of the locking members 340 are disengaged from the sawteeth of the first clutch gear 112, and thus the first clutch gear 112 does not rotate. That is, the rotor cover part 110 according to the present invention only rotates forward.

Meanwhile, when the left handle of the pair of handles is pulled, the second wire is pulled, and the reel 310 of the second rotating member rotates forward as a result. As the reel 310 of the second rotating member rotates forward, the spring cover part 320 of the second rotating member, which includes the plurality of grooves 322 into which the plurality of protrusions 313 of the reel 310 are fitted, rotates forward in the same direction as the reel 310 of the second rotating member. Also, as the spring cover part 320 rotates forward, the locking members 340 of the second rotating member fitted to the plurality of protrusions 325 of the spring cover part 320 of the second rotating member rotate forward. As the locking members 340 of the second rotating member rotate forward, the second clutch gear 132 engaged with the claw parts 342 of the locking members 340 rotates forward, and, as the second clutch gear 132 rotates, the cover main body 111 rotates forward. As the cover main body 111 rotates forward, the rotor 620 fitted to the cover stepped part 115 rotates forward, and, corresponding to the forward rotation of the rotor 620, a magnetic force is generated in the stator 610 such that power is generated. The battery provided on the PCB is charged with the power generated as above.

Also, pulling of the left handle of the second wire is restricted by an elastic force of the spiral spring 510, and, as a result, the user naturally stops the process of pulling the left handle.

When the process of pulling the left handle is stopped, the second wire 400 is wound around the reel 310 of the second rotating member by an elastic force of the spiral spring 510, and the reel 310 of the second rotating member rotates in the reverse direction as a result. As the reel 310 of the second rotating member rotates in the reverse direction, the spring cover part 320 of the second rotating member, which includes the plurality of grooves 322 into which the plurality of protrusions 313 of the reel 310 are fitted, rotates in the reverse direction like the reel 310 of the second rotating member. Also, as the spring cover part 320 rotates in the reverse direction, the locking members 340 of the second rotating member fitted to the plurality of protrusions 325 of the spring cover part 320 of the second rotating member rotate in the reverse direction. As the locking members 340 of the second rotating member rotate in the reverse direction, the claw parts 342 of the locking members 340 are disengaged from the sawteeth of the second clutch gear 132, and thus the second clutch gear 132 does not rotate. That is, the rotor cover part 110 according to the present invention only rotates forward.

By the user repeatedly performing the process of alternately pulling the right handle and the left handle as described above, the rotor cover member 100 continuously rotates forward. As a result, the power generation member 600 may continuously perform power generation. That is, by the user repeatedly performing the operation of pulling the wires with one hand or both hands, power generation may be continuously performed for a long time.

Although the present invention devised by the inventor has been described in detail with reference to the above embodiments, the present invention is not limited to the above-described embodiments, and various modifications may be made without departing from the gist of the present invention.

That is, the portable self-powered generation apparatus capable of being manufactured in a small size and self-generating power at high efficiency to charge a battery, and a module equipped with the same have been described above, but the present invention is not limited thereto, and the size of the self-powered generation apparatus may be enlarged to perform large-capacity self-power generation.

### [Industrial Applicability]

By using a portable self-powered generation apparatus and a module equipped with the same according to the present invention, a user can continuously perform power generation for a long time by repeatedly performing an operation of pulling a wire with one hand or two hands in military operations, refugee camps, disasters such as an earthquake or the like, emergency situations on ships, emergency in outdoor activities or the like, in which there is often no access to electricity.

## Claims

1. A portable self-powered generation apparatus comprising:
a rotor cover member that is rotatable;
first and second rotating members that rotate the rotor cover member;
first and second wires that each rotate the first and second rotating members by a pulling operation;
first and second spring members that perform winding operations on the first and second wires, respectively, and
a power generation member that generates power according to rotation of the rotor cover member,
wherein the first and second rotating members are each fitted to the rotor cover member, and
the power generation member is embedded in the rotor cover member and includes a rotor that rotates according to rotation of the rotor cover member and a stator mounted in the rotor.

2. The apparatus of claim 1, wherein the rotor cover member only rotates in one direction, and
the first and second rotating members are fitted to left and right portions or upper and lower portions of the rotor cover member, respectively.

3. The apparatus of claim 2, wherein the rotor cover member includes a rotor cover part and a rotor gear part,
the rotor cover part includes a bowl-shaped cover main body, a first clutch gear provided on an outer side of the cover main body, a cover shaft having a hollow into which a shaft is inserted, and a cover stepped part provided along a circumference of an inner side of the cover main body so that the rotor is fitted to the cover stepped part, and
the rotor gear part includes a disc-shaped gear main body, a second clutch gear provided at an inner side of the gear main body, and a shaft insertion part fitted to the cover shaft.

4. The apparatus of claim 3, further comprising a bracket member on which the power generation member is mounted,
wherein the bracket member is provided to be spaced apart from each of the rotor cover part and the rotor gear part and includes a stator mounting part to which the stator is fixed, and
the stator is screw-fastened to the stator mounting part.

5. The apparatus of claim 4, wherein the rotor includes a rotor main body spaced apart from the stator and provided in a cylindrical shape, a rotor stepped part provided at one side of the rotor main body and fitted to the cover stepped part, and a plurality of permanent magnets attached to an inner side of the rotor main body.

6. The apparatus of claim 5, wherein each of the first and second rotating members includes:
a reel that maintains a wound state of the wire and is rotatable according to pulling or winding of the wire;
a spring cover part that is fitted to the reel and includes the spring member embedded therein; and
a locking member mounted on the spring cover part and fitted to the first clutch gear of the rotor cover part or the second clutch gear of the rotor gear part so that the rotor cover member rotates in one direction.

7. The apparatus of claim 6, wherein each of the first and second spring members includes a spiral spring embedded in the spring cover part and a spring holder into which an end portion of a shaft is inserted,
one inner end portion of the spiral spring is inserted into the spring holder, and
one outer end portion of the spiral spring is inserted into the spring cover part.

8. The apparatus of claim 7, wherein a plurality of protrusions are provided on an inner side of a circumference of the reel,
a plurality of grooves are provided on an outer side of a circumference of the spring cover part, and
each of the plurality of protrusions is fitted to one of the plurality of grooves to be integrally rotatable.

9. The apparatus of claim 7, wherein an insertion part into which the one outer end portion of the spiral spring is inserted is provided on the circumference of the spring cover part, and a seating part on which the one outer end portion of the spiral spring, which is inserted through the insertion part, is seated is provided on an outer side of the spring cover part.

10. The apparatus of claim 7, further comprising a cover member that accommodates the rotor cover member, the first and second rotating members, the first and second wires, and the first and second spring members,
wherein the cover member includes an upper cover and a lower cover that are separable.

11. The apparatus of claim 10, wherein the spring holder includes a protrusion, and
the protrusion is inserted into a concave part provided in the cover member to block rotation of the spring holder.

12. The apparatus of claim 7, wherein a pulling state of the wire is controlled by an elastic force of the spiral spring.

13. The apparatus of claim 7, wherein the spring cover part includes a support protrusion that supports rotation of the locking member and a pair of protrusions fitted to the locking member around the support protrusion,
the locking member is provided as a pair of locking members around the support protrusion, and
the locking member is fitted to the first clutch gear or the second clutch gear on the same plane as the rotor cover part or the rotor gear part.

14. The apparatus of claim 1, wherein the first rotating member, the first wire, and the first spring member are operated independently of the second rotating member, the second wire, and the second spring member.

15. A module comprising:
the portable self-powered generation apparatus of claim 1;
a main body that accommodates the portable self-powered generation apparatus;
a bottom member that is coupled to the main body and fixes the portable self-powered generation apparatus; and
a first handle and a second handle that are coupled to first and second wires, respectively.

16. The module of claim 15, further comprising at least one of a battery that is mounted in the main body and is charged with electricity generated by the power generation apparatus, a light emitting device connected to the battery, and a Universal Serial Bus (USB) terminal connected to the battery.

17. The module of claim 15, wherein a screw-coupled structure is provided on an upper portion of the main body, and
the main body is coupled to at least one of an insect/mosquito repellent device module, an emergency light module, a rescue signal apparatus module, a heater module, a cooler module, and the like that are allowed to be fastened in a screw-coupling manner.
